# EUROPEAN PATENT SPECIFICATION

(11) **EP 1 956 484 B1**
(45) Date of publication and mention of the grant of the patent: **19.10.2011**
(21) Application number: 07101907.9
(22) Date of filing: 07.02.2007
(51) Int. Cl.: G06F 9/46

(54) **Administration module, producer and consumer processor, arrangement thereof and method for inter-processor communication via a shared memory**
Verwaltungsmodul, Hersteller- und Verbraucherrechner, Anordnung davon und Verfahren zur Kommunikation zwischen Rechnern über einen gemeinsam verwendeten Speicher
Module d'administration, processeur producteur et consommateur, leur agencement et procédé pour communication entre processeurs via une mémoire partagée

(43) Date of publication of application: 13.08.2008
(73) Proprietor: ROBERT BOSCH GMBH, 70442 Stuttgart (DE)
(72) Inventor: Roettger, Kai, 70376 Stuttgart (DE); Hacioglu, Hamit, 70469 Stuttgart (DE)

(56) References cited:
- US-A- 4 875 224
- VIDYASANKAR K: "CONCURRENT READING WHILE WRITING REVISITED*" DISTRIBUTED COMPUTING, ACM / SPRINGER, NEW YORK, NY, US, vol. 4, no. 2, 1 June 1990 (1990-06-01), pages 81-85, XP000281949 ISSN: 0178-2770
- J. CHEN, A. BURNS: "A ThreeSlot Asynchronous Reader/Writer Mechanism for Multiprocessor RealTime Systems" RESEARCH REPORT, 16 January 1997 (1997-01-16), pages 1-28, XP002448052 University of York

## Description

### State of the art

Present invention relates to an administration module and a method for inter-processor communication via a shared memory according to independent claims.

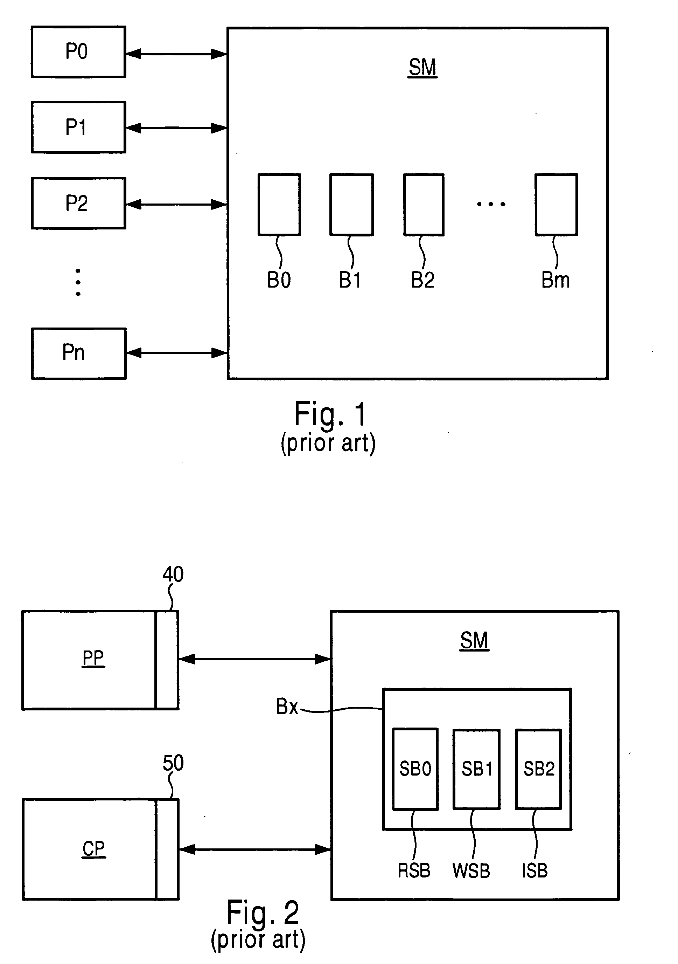

The task of inter-processor communication is usually solved by a common shared memory approach as shown in figure 1.

N processors P0 ... Pn have access to the same memory SM via interfaces 40, 50 and can exchange data through m shared buffers B0 ... Bm. In order to preserve system performance, the following conditions have to be fulfilled.

In the first place, all processors are totally asynchronous, i.e. read and write operations from and to the buffers may happen at any time. In addition, the buffer-size is not limited, which means that atomic read and write operations are not possible. Finally, no blocking mechanisms are allowed, i. e. processors can not wait for each other to complete a read or write operation.

Considering these circumstances, granting data consistency is the major issue in prior art solutions. Several publications have dealt with such issue and solved the problem. One suitable solution is the triple-buffering approach introduced in 'A Three-Slot Asynchronous Reader/Writer Mechanism for Multiprocessor Real-Time Systems. Technical Report YCS-286, Department of Computer Science, University of York, Jan. 1997' by J. Chen and A. Burns. The solution covers use cases under the following restrictions.

First, each buffer is assigned to 2 processors, one of them being a dedicated producer PP, which exclusively writes to a buffer Bx, the other being a dedicated consumer CP, which exclusively reads from the buffer Bx. Second, only the most recent consistent data-set is of interest. Overwriting unused data-sets is not critical. The basic principle may be seen from figure 2.

Each buffer Bx of the shared memory SM consists of three sub-buffers SB0 ... SB2, each able to host the whole data-set. One sub-buffer (currently SB1) is reserved by the producer as the write-sub-buffer WSB and is currently filled with new data. Consequently, the content is inconsistent and not suitable for reading. One sub-buffer (currently SB0) is reserved by the consumer as the read-sub-buffer RSB and is currently read out. The content is consistent and has to be protected from writing. The third sub-buffer (currently SB3) is idle, i. e. the idle-sub-buffer ISB, and becomes the write-sub-buffer WSB whenever the producer has a new set of data for writing. When the consumer requests a new set of data for reading, the idle-sub-buffer ISB becomes the read-sub-buffer RSB, if the producer dumped a new set of data in the meanwhile.

Thus, there is a remarkable amount of administrational overhead necessary for managing the sub-buffers S0 ... S2. This can be done by the processors PP and CP themselves using the appropriate software. But according to the above mentioned report of J. Chen and A. Burns there is still the requirement of a compare-and-swap instruction, which has to be supported by the processors.

Laid-open patent application DE 44 20 123 discloses a bank-switching device for microcomputers, which switches the bank in response to an address validity signal to avoid waiting cycles while switching.

Laid-open patent application DE 100 03 006 discloses an arrangement and method for signal processing and storing, in which data-transfer of filtering coefficients and input/output values is controlled by a controller.

Further examples of inter processor communication are described in Vidyasankar K.:"Concurrent reading while writing revisited" Distributed Computing, ACM/Springer, New York, NY, US, vol.4, no.2, 1 June 1990 (1990-06-01), pages 81- 85, XP00281949 ISSN:0178-2770 and US 4875224.

### Disclosure of the invention

It is the object of present invention to provide for inter-processor communication with low administrative burden to the processors, which is the same way fast, simple and efficient, and may be implemented economically. The invention is set out in the independent device and method claims.

Such object is solved by an administration module, comprising means for storing and administering the states of triple-buffers, each buffer having a read-, a write- and an idle-sub-buffer, means for communicating with at least one producer and at least one consumer processor, wherein said administration means is formed to determine, in response to a producer processor access, a targeted write-sub-buffer, to look up an idle-sub-buffer-ID from said storing means, to deliver this idle-sub-buffer-ID to be the new write-sub-buffer to the appropriate producer processor via said communication means, and to update each state of said sub-buffers according to the current assignments, and wherein said administration means is further formed to determine, in response to a consumer processor access, a targeted read-sub-buffer, to check if the content of said idle-sub-buffer is more recent than the content of said read-sub-buffer, and if not, to return this read-sub-buffer-ID to be the new read-sub-buffer to the appropriate consumer processor via said communication means, otherwise, to look up the idle-sub-buffer-ID and to deliver this idle-sub-buffer-ID to be the new read-sub-buffer to the appropriate consumer processor via said communication means.

One essential point about the inventive module is that the sub-buffers are handled independently, thereby freeing the processors from nearly all administrative overhead and special requirements such as compare-and-swap instructions. The remaining overhead is a single access to the administration module, in order to fetch the next write/read-sub-buffer for a particular buffer. In the most common case, the interface is a standard processor local bus, consisting of address, data and control lines. Thus, for the first time, fast, simple and efficient communication between the processors may be realized. Since furthermore the administration module is a piece of hardware, which is accessible from all processors, implementation costs are cut down to such module.

Preferred embodiments of said administration module are set out in the dependent claims, which relate to efficient buffer access from the consumer processors point of view.

In a first aspect, said storing means comprises a FIFO (First-In-First-Out)-stack, and said administration means is formed to configure each of said buffers to enquire their ID into said FIFO-stack each time a new data-set has arrived, and to send an interrupt request via said communication means to the appropriate consumer processor. Thus, the consumer processor immediately knows without polling the related buffer, which buffer has been updated and can read the data-set from the shared memory after determining the correct read-sub-buffer.

If however the amount of buffers to process is very small, i. e. smaller than the data bus width, a register approach is more efficient.

Therefore, in a second aspect, said storing means comprises at least one register, and said administration means is formed to configure each of said buffers to set a buffer-related bit in said register each time a new data-set has arrived, and to send an interrupt request via said communication means to the appropriate consumer processor. By evaluating the register content, the consumer processor gets all pending buffers with a single read access instead of successively emptying the FIFO.

The object of present invention is finally solved by a method of administering the states of triple-buffers for inter-processor communication via a shared memory, each buffer having a read-, a write- and an idle-sub-buffer, said method comprising the steps of producer processor access, wherein the targeted buffer is determined, the idle-sub-buffer-ID is looked up, this idle-sub-buffer-ID is delivered to the appropriate producer processor to be the new write-sub-buffer, and each state of said sub-buffers is updated according to the current assignments, and consumer processor access, wherein the targeted buffer is determined, the content of the idle-sub-buffer is checked whether to be more recent than the state of said read-sub-buffer, and if not, this read-sub-buffer-ID is returned to be the new read-sub-buffer to the appropriate consumer processor, otherwise, the idle-sub-buffer-ID is looked up and delivered to be the new read-sub-buffer to the appropriate consumer processor.

One essential point about the inventive method is that a minimum number of steps are necessary for gathering the required information. Thus, for the processors, efficient access to the respective sub-buffers is possible without administrative burden. The method also provides for cheap realization, since it is easy to implement into and to maintain in a piece of hardware.

Preferred embodiments of said method are set out in the dependent method claims.

In a first aspect, accordingly, the method comprises the step of administrative access, wherein the state of each buffer can be reset and buffer specific configurations can be made. This allows for a defined starting configuration and reset of shared memory access the same as it opens for further accelerations.

Preferably, in a second aspect, the step of administrative access comprises interrupt activation for said buffers upon each producer processor access. Thus, the consumer processor immediately knows which buffer has been updated as already described above.

In a third aspect, the step of administrative access comprises propagation of buffer-IDs upon each producer processor access. This enables quick access of the consumer processor according to the current settings without polling the related buffer.

### Brief description of the drawings

In the following, present invention will be explained in detail by means of an example. Equal parts and parts of equal effect have been given same reference numerals. There is shown in :
- Figure 1: a common shared memory approach as known from the prior art;
- Figure 2: a basic principle of triple buffering as known from the prior art;
- Figure 3: an administration module for triple buffers according to present inven- tion;
- Figure 4: a sample address map of the administration module of figure 3 for managing 4096 triple-buffers, and
- Figure 5: an interrupting mechanism provided in the administration module of fig- ure 3.

### Embodiments of the invention

Figures 1 and 2 show a known common shared memory approach and a basic principle of triple buffering, respectively. Such state-of-the art has already been discussed above in the introductory part of this application.

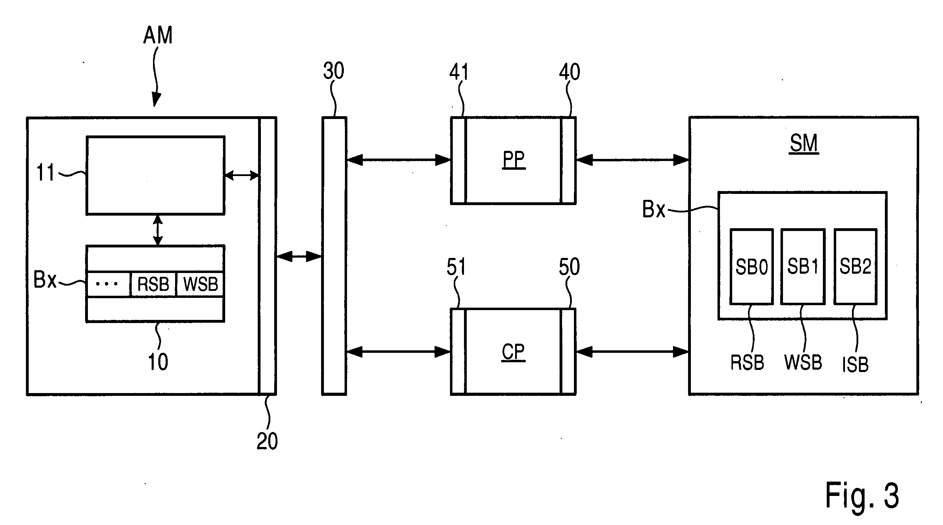

Figure 3 shows an administration module AM for triple buffers SB0 ... SB2 according to present invention, which manages communication of a producer processor PP and a consumer processor CP via shared memory SM. The administration module AM is provided with a storing means 10, which in this case is a state table for holding write-, read and idle-sub-buffer-Ids for each buffer Bx. The storing means 10 is managed by an administration means 11, which in turn communicates to the outside via interface 20. Concurrent access to the module AM from multiple processors is achieved by a means for arbitration 30, which is located in the communication path connecting interface 20 of the module AM with interfaces 41, 51 of the processors PP, CP. Such means for arbitration 30 may also be formed integrally with the administration module AM in order to reduce the number of parts necessary on a board. The processors PP, CP are further provided with interfaces 40, 50 to communicate via shared memory SM, which comprises triple-buffers Bx each having sub-buffers SB0 ... SB2, the latter being alternating read RSB, write WSB or idle-sub-buffers ISB.

The module supports a producer access (read access to producer area), wherein the administration module AM determines the targeted buffer Bx according to the address offset, looks up the idle-sub-buffer ISB for this buffer Bx in the state-table 10, delivers this sub-buffer-Id (also called index in the following) as read value to the producer processor PP and updates the state-table 10. Now, the producer processor PP can use this sub-buffer WSB within the shared memory SM exclusively for dumping its new data-set.

Further, in a consumer access (read access to a consumer area), the administration module AM determines the targeted buffer Bx according to the address offset and checks if new data has been dumped since the last consumer access. If no new data-set is available the appropriate flag is returned as read value to the consumer processor CP. Otherwise, the module AM looks up the idle-sub-buffer ISB, which holds the most recent consistent data-set for this buffer Bx, delivers this sub-buffer index as read value to the consumer and updates the state-table. Now, the consumer processor CP can use this sub-buffer within the shared memory SM exclusively for reading the most recent data-set.

Finally, in an administrative access (write access to a consumer/producer area), the state of each buffer Bx can be reset and buffer specific configurations can be made, like interrupt activation as described later.

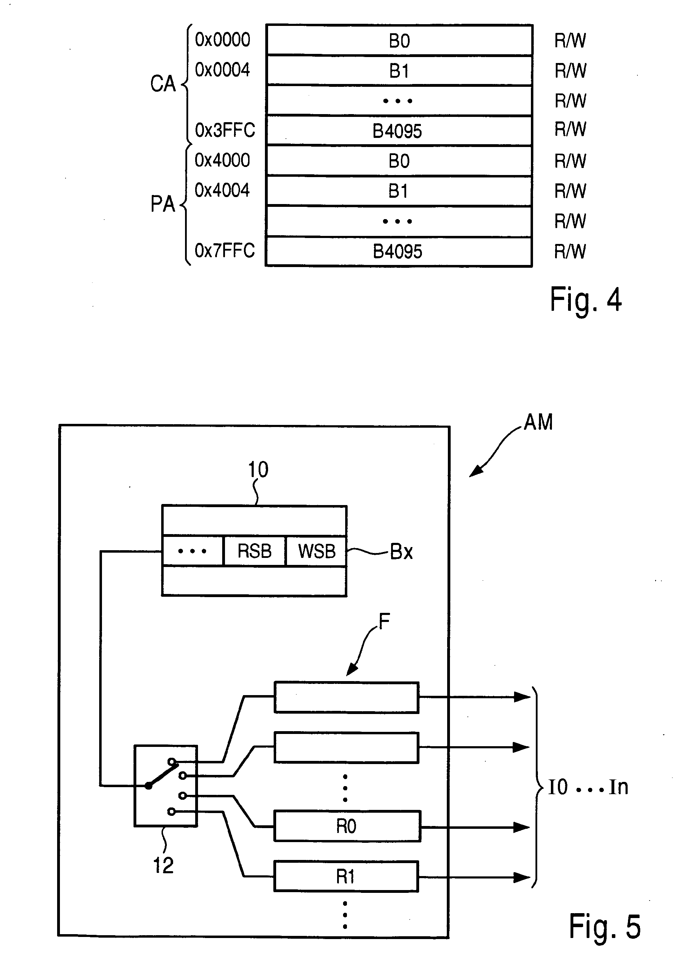

Figure 4 shows a sample address map of the administration module AM of figure 3 for managing 4096 triple-buffers. Read/write buffers B0 ... B4095 constitute a 16-bit consumer area CA or producer area PA of the share memory SM, respectively.

From the producer processors point of view, this support is enough for getting an efficient software flow. Every time, the producer processor PP dumped a new set of data to the current write-sub-buffer WSB, it invokes the administration module AM in order to acknowledge this write-sub-buffer WSB and get the next write-sub-buffer WSB for the next set of data. Both with only one additional read access to the administration module AM.

From the consumer processors point of view each buffer Bx of interest has to be polled for the arrival of new data. Therefore, according to the invention, an additional interrupting mechanism has been developed for an efficient software flow without polling. Such mechanism is explained in the following.

Figure 5 shows an interrupting mechanism provided in the administration module AM of figure 3. Each buffer Bx can be configured to enqueue its ID into a FIFO F, each time a data-set is dumped by the producer processor PP. As soon as the FIFO F contains an entry, an interrupt request 10 ... In is send to the appropriate consumer processor CP. By evaluating the FIFO F entry, the consumer processor CP immediately knows which buffer Bx has been updated and can read the data-set from the shared memory SM after determining the correct read-sub-buffer RSB.

If the amount of buffers Bx to process however is very small, ie smaller than the data bus width, a register approach is more efficient. Each buffer Bx is then configured to set a particular bit in a register R, each time a data-set is dumped by the producer. As soon as one bit is set, an interrupt request is send to the appropriate consumer processor CP. By evaluating the register content, the consumer processor CP gets all pending buffers Bx with a single read access instead of successively emptying the FIFO F.

In both the FIFO and register approach, on each producer access, propagation of buffer Bx is made towards a means for position configuration 12 of each buffer Bx in the FIFO-stack F and/or the register R. Therefore, both methods of acceleration may be incorporated into the administration module AM, whichever may be at least configured to be in effect.

As can be seen by way of example, too, since the inventive administration module AM takes the burden of managing the buffers Bx from the respective processors PP CP, fast and simple, same as efficient processor communication is enabled at low costs. The additional placement of module AM within the known environment of processors and shared memory is acceptable taking into account the merits thereof.

## Claims

1. Administration module (AM) for inter-processor communication via a shared memory (SM), said module (AM) comprising:
- means for storing (10) and administering (11) the states of triple-buffers (B0 ... Bm), each buffer (B0 ... Bm) having a read- (RSB), a write- (WSB) and an idle-sub-buffer (ISB);
- means for communicating (20) with at least one producer (PP) and at least one consumer processor (CP);
- wherein said administration means (11) is formed to determine a targeted buffer (B0 ... Bm), in response to a producer processor request requesting a write-sub-buffer (WSB) via a second communication means (41) of the producer processor, by the following steps: look up the idle-sub-buffer-ID from said storing means (10), deliver this idle-sub-buffer-ID to be the new write-sub-buffer (WSB) to the appropriate producer processor (PP) via said communication means (20), and to update each state of said sub-buffers (RSB, WSB, ISB) according to the current assignments, and
- wherein said administration means (11) is further formed to determine a targeted buffer (B0... Bm), in response to a consumer processor request via a second communication means (51) of the consumer processor requesting a read-sub-buffer (RSB), by the following steps: check if the content of said idle-sub-buffer (ISB) is more recent than the content of said read-sub-buffer (RSB), and if not, to return this read-sub-buffer-ID to be the new read-sub-buffer (RSB) to the appropriate consumer processor (CP) via said communication means (20), otherwise, to look up the idle-sub-buffer-ID and to deliver this idle-sub-buffer-ID to be the new read-sub-buffer (RSB) to the appropriate consumer processor (CP) via said communication means (20).

2. Administration module (AM) according to claim 1, wherein said storing means (10) comprises a FIFO-stack (F), and said administration means (10) is formed to configure each of said buffers (B0 ... Bm) to enqueue their ID into said FIFO-stack (F) in case the write-sub-buffer (WSB) has changed, and to send an interrupt request (I0 ... In) via said communication means (20) to the appropriate consumer processor (CP).

3. Administration module (AM) according to claims 1 or 2, wherein said storing means (10) comprises at least one register (R0 ... Ri), and said administration means (11) is formed to configure each of said buffers (B0 ... Bm) to set a buffer-related bit in said register (R0 ... Ri) in case said write-sub-buffer (WSB) has changed, and to send an interrupt request (I0 ... In) via said communication means (20) to the appropriate consumer processor (CP).

4. Method of administering the states of triple-buffers (B0 ... Bm) for inter-processor communication via a shared memory (SM), each buffer (B0 ... Bm) having a read- (RSB), a write- (WSB) and an idle-sub-buffer (ISB), said method comprising the steps of :
- In response to a producer processor request requesting a write-sub-buffer (WSB) via a second communication means (41) of a producer processor, wherein a targeted buffer (B0... Bm) is determined by the following steps: the idle-sub-buffer-ID is looked up, this idle-sub-buffer-ID is delivered to the appropriate producer processor (PP) via a communication means (20) to be the new write-sub-buffer (WSB), and each state of said sub-buffers (RSB, WSB, ISB) is updated according to the current assignments, and
- In response to a consumer processor request requesting a read-sub-buffer (RSB) via a second communication means (51) of a consumer processor, wherein a targeted buffer (B0... Bm) is determined by the following steps: the content of the idle-sub-buffer (ISB) is checked whether it is more recent than the state of said read-sub-buffer (RSB), and if not, this read-sub-buffer-ID is returned to be the new read-sub-buffer (RSB) to the appropriate consumer processor (CP) via said communication means (20), otherwise, the idle-sub-buffer-ID is looked up and delivered to be the new read-sub-buffer (RSB) to the appropriate consumer processor (CP) via said communication means (20).

5. Method according to claim 4 further comprising the step of :
- administrative access, wherein the state of each buffer (B0 ... Bm) can be reset and buffer specific configurations can be made.

6. Method according to claims 5, wherein the step of administrative access comprises interrupt activation for said buffers (B0 ... Bm) upon each producer processor access.

7. Method according to any one of claims 5 or 6, wherein the step of administrative access comprises propagation of buffer-IDs upon each producer processor access.

## Patentansprüche

1. Administrationsmodul (AM) zur Kommunikation zwischen Prozessoren über einen gemeinsam benutzten Speicher (SM), wobei das Modul (AM) Folgendes umfasst:
- ein Mittel zum Speichern (10) und Administrieren (11) der Zustände von Dreifachpuffern (B0 ... Bm), wobei jeder Puffer (B0 ... Bm) einen Lese-(RSB), einen Schreib-(WSB) und einen Leerlauf-Subpuffer (ISB) aufweist;
- ein Mittel zum Kommunizieren (20) mit mindestens einem Produzenten-(PP) und mindestens einem Verbraucherprozessor (CP);
- wobei das Administrationsmittel (11) ausgestaltet ist, als Reaktion auf eine Produzentenprozessoranforderung, die einen Schreib-Subpuffer (WSB) über ein zweites Kommunikationsmittel (41) des Produzentenprozessors anfordert, einen Puffer (B0 ... Bm), auf den abgezielt wird, durch die folgenden Schritte zu bestimmen: Nachschlagen der Leerlauf-Subpuffer-ID aus dem Speichermittel (10), Abliefern dieser Leerlauf-Subpuffer-ID, der neue Schreib-Subpuffer (WSB) zu sein, an den entsprechenden Produzentenprozessor (PP) über das Kommunikationsmittel (20) und Aktualisieren jedes Zustands der Subpuffer (RSB, WSB, ISB) gemäß den aktuellen Zuweisungen und
- wobei das Administrationsmittel (11) ferner ausgestaltet ist, als Reaktion auf eine Verbraucherprozessoranforderung über ein zweites Kommunikationsmittel (51) des Verbraucherprozessors, die einen Lese-Subpuffer (RSB) anfordert, einen Puffer (B0 ... Bm) , auf den abgezielt wird, durch die folgenden Schritte zu bestimmen: Prüfen, ob der Inhalt des Leerlauf-Subpuffers (ISB) neuer als der Inhalt des Lese-Subpuffers (RSB) ist, und wenn nicht, Zurückgeben dieser Lese-Subpuffer-ID, der neue Lese-Subpuffer (RSB) zu sein, an den entsprechenden Verbraucherprozessor (CP) über das Kommunikationsmittel (20), andernfalls Nachschlagen der Leerlauf-Subpuffer-ID und Abliefern dieser Leerlauf-Subpuffer-ID, der neue Lese-Subpuffer (RSB) zu sein, an den entsprechenden Verbraucherprozessor (CP) über das Kommunikationsmittel (20).

2. Administrationsmodul (AM) nach Anspruch 1, wobei das Speichermittel (10) einen FIFO-Stapel (F) umfasst und das Administrationsmittel (10) ausgestaltet ist, jeden der Puffer (B0 ... Bm) zu konfigurieren, deren ID in den FIFO-Stapel (F) einzureihen, falls sich der Schreib-Subpuffer (WSB) geändert hat, und eine Interrupt-Anforderung (IO ... In) über das Kommunikationsmittel (20) zu dem entsprechenden Verbraucherprozessor (CP) zu senden.

3. Administrationsmodul (AM) nach Anspruch 1 oder 2, wobei das Speichermittel (10) mindestens ein Register (R0 ... Ri) umfasst und das Administrationsmittel (11) ausgestaltet ist, jeden der Puffer (B0 ... Bm) zu konfigurieren, ein pufferbezogenes Bit in dem Register (R0 ... Ri) zu setzen, falls sich der Schreib-Subpuffer (WSB) geändert hat, und eine Interrupt-Anforderung (IO ... In) über das Kommunikationsmittel (20) zu dem entsprechenden Verbraucherprozessor (CP) zu senden.

4. Verfahren zum Administrieren der Zustände von Dreifachpuffern (B0 ... Bm) zur Kommunikation zwischen Prozessoren über einen gemeinsam benutzten Speicher (SM), wobei jeder Puffer (B0 ... Bm) einen Lese- (RSB), einen Schreib- (WSB) und einen Leerlauf-Subpuffer (ISB) aufweist, wobei das Verfahren die folgenden Schritte umfasst:
- als Reaktion auf eine Produzentenprozessoranforderung, die einen Schreib-Subpuffer (WSB) über ein zweites Kommunikationsmittel (41) eines Produzentenprozessors anfordert, wobei ein Puffer (B0 ...Bm), auf den abgezielt wird, durch die folgenden Schritte bestimmt wird: die Leerlauf-Subpuffer-ID wird nachgeschlagen, diese Leerlauf-Subpuffer-ID wird an den entsprechenden Produzentenprozessor (PP) über ein Kommunikationsmittel (20) abgeliefert, der neue Schreib-Subpuffer (WSB) zu sein, und jeder Zustand der Subpuffer (RSB, WSB, ISB) wird gemäß den aktuellen Zuweisungen aktualisiert und
- als Reaktion auf eine Verbraucherprozessoranforderung, die einen Lese-Subpuffer (RSB) über ein zweites Kommunikationsmittel (51) eines Verbraucherprozessors anfordert, wobei ein Puffer (B0 ... Bm), auf den abgezielt wird, durch die folgenden Schritte bestimmt wird: der Inhalt des Leerlauf-Subpuffers (ISB) wird geprüft, ob er neuer als der Zustand des Lese-Subpuffers (RSB) ist, und wenn nicht, wird diese Lese-Subpuffer-ID an den entsprechenden Verbraucherprozessor (CP) über das Kommunikationsmittel (20) zurückgegeben, der neue Lese-Subpuffer (RSB) zu sein, andernfalls wird die Leerlauf-Subpuffer-ID nachgeschlagen und an den entsprechenden Verbraucherprozessor (CP) über das Kommunikationsmittel (20) abgeliefert, der neue Lese-Subpuffer (RSB) zu sein.

5. Verfahren nach Anspruch 4, ferner mit dem folgenden Schritt:
- administrativer Zugriff, wobei der Zustand jedes Puffers (B0 ... Bm) rückgesetzt werden kann und pufferspezifische Konfigurationen vorgenommen werden können.

6. Verfahren nach Anspruch 5, wobei der Schritt des administrativen Zugriffs Interrupt-Aktivierung für die Puffer (B0 ... Bm) bei jedem Produzentenprozessorzugriff umfasst.

7. Verfahren nach einem der Ansprüche 5 oder 6, wobei der Schritt des administrativen Zugriffs Propagation von Puffer-IDs bei jedem Produzentenprozessorzugriff umfasst.

## Revendications

1. Module d'administration (AM) pour communication entre processeurs via une mémoire partagée (SM), ledit module (AM) comprenant :
- un moyen destiné à stocker (10) et administrer (11) les états de tampons triples (B0..., Bm), chaque tampon (B0..., Bm) ayant des sous-tampons de lecture (RSB, Read Sub-Buffer), d'écriture (WSB, Write-Sub-Buffer) et inactif (ISB, Idle Sub-Buffer) ;
- un moyen pour communiquer (20) avec au moins un processeur producteur (PP) et au moins un processeur consommateur (CP) ;
- dans lequel ledit moyen d'administration (11) est conçu pour déterminer un tampon ciblé (B0..., Bm), en réponse à une demande d'un processeur producteur demandant un sous-tampon d'écriture (WSB, Write-Sub-Buffer) via un second moyen de communication (41) du processeur producteur, conformément aux étapes suivantes : consulter l'ID de sous-tampon inactif dans ledit moyen de stockage (10), délivrer l'ID de sous-tampon inactif afin qu'il soit le nouveau sous-tampon d'écriture (WSB) au processeur producteur (PP) approprié via ledit moyen de communication (20) et pour mettre à jour chaque état desdits sous-tampons (RSB, WSB, ISB) conformément aux affectations en cours, et
- dans lequel ledit moyen d'administration (11) est en outre conçu pour déterminer un tampon ciblé (B0..., Bm), en réponse à une demande d'un processeur consommateur via un second moyen de communication (51) du processeur consommateur, demandant un sous-tampon de lecture (RSB), conformément aux étapes suivantes : vérifier si le contenu dudit sous-tampon inactif (ISB) est plus récent que le contenu dudit sous-tampon de lecture (RSB), et si cela n'est pas le cas, renvoyer ledit ID de sous-tampon de lecture afin qu'il soit le nouveau sous-tampon de lecture (RSB) au processeur consommateur (CP) approprié via ledit moyen de communication (20), et dans le cas contraire, consulter l'ID de sous-tampon inactif et délivrer cet ID de sous-tampon inactif afin qu'il soit le nouveau sous-tampon de lecture (RSB) au processeur consommateur (CP) approprié via ledit moyen de communication (20).

2. Module d'administration (AM) selon la revendication 1, dans lequel ledit moyen de stockage (10) comprend une pile FIFO (F), et ledit moyen d'administration (10) est conçu pour configurer chacun desdits tampons (B0..., Bm) afin de mettre en file d'attente leur ID dans ladite pile FIFO (F) dans le cas où le sous-tampon d'écriture (WSB) a changé, et pour envoyer une demande d'interruption (IO... In) via ledit moyen de communication (20) au processeur consommateur (CP) approprié.

3. Module d'administration (AM) selon la revendication 1 ou 2, dans lequel ledit moyen de stockage (10) comprend au moins un registre (R0... Ri), et ledit moyen d'administration (11) est conçu pour configurer chacun desdits tampons (B0..., Bm) afin de positionner un bit lié au tampon dans ledit registre (R0...Ri) dans le cas où ledit sous-tampon d'écriture (WSB) a changé, et d'envoyer une demande d'interruption (IO...In) via ledit moyen de communication (20) au processeur consommateur (CP) approprié.

4. Procédé d'administration des états de tampons triples (B0..., Bm) pour communication entre processeurs via une mémoire partagée (SM), chaque tampon (B0..., Bm) ayant des sous-tampons de lecture (RSB), d'écriture (WSB) et inactif (ISB), ledit procédé comprenant les étapes consistant à :
- en réponse à une demande d'un processeur producteur, demander un sous-tampon d'écriture (WSB) via un second moyen de communication (41) d'un processeur producteur, dans lequel un tampon ciblé (B0..., Bm) est déterminé par les étapes suivantes : l'ID de sous-tampon inactif est consulté, cet ID de sous-tampon inactif est délivré au processeur producteur (PP) approprié via un moyen de communication (20) afin qu'il soit le nouveau sous-tampon d'écriture (WSB), et chaque état desdits sous-tampons (RSB, WSB, ISB) est mis à jour conformément aux affectations en cours, et
- en réponse à une demande d'un processeur consommateur, demander un sous-tampon de lecture (RSB) via un second moyen de communication (51) d'un processeur consommateur, dans lequel un tampon ciblé (B0... Bm) est déterminé par les étapes suivantes : le contenu du sous-tampon inactif (ISB) est vérifié pour savoir s'il est plus récent que l'état dudit sous-tampon de lecture (RSB), et si cela n'est pas le cas, cet ID de sous-tampon de lecture est renvoyé afin qu'il soit le nouveau sous-tampon de lecture (RSB) au processeur consommateur (CP) approprié via ledit moyen de communication (20), et dans le cas contraire, l'ID de sous-tampon inactif est consulté et délivré au nouveau sous-tampon inactif afin qu'il soit le nouveau sous-tampon de lecture (RSB) au processeur consommateur (CP) approprié via ledit moyen de communication (20).

5. Procédé selon la revendication 4, comprenant en outre l'étape consistant à :
- effectuer un accès administratif, l'état de chaque tampon (B0..., Bm) pouvant être réinitialisé et des configurations spécifiques du tampon pouvant être effectuées.

6. Procédé selon la revendication 5, dans lequel l'étape d'accès administratif comprend une activation par interruption pour lesdits tampons (B0...Bm) lors de chaque accès d'un processeur producteur.

7. Procédé selon l'une quelconque des revendications 5 ou 6, dans lequel l'étape d'accès administratif comprend la propagation d'identificateurs ID de tampon lors de chaque accès d'un processeur producteur.
